# EUROPEAN PATENT SPECIFICATION

(11) **EP 0 857 425 B1**
(45) Date of publication and mention of the grant of the patent: **01.12.2004**
(21) Application number: 97111304.8
(22) Date of filing: 04.07.1997
(51) Int. Cl.: A23G 9/26, A23G 7/02, A23G 9/24

(54) **Plant and method for the production of ice creams with stick, with devices suitable to move the product without getting in touch with it**
Vorrichtung und Verfahren zur Herstellung von Speiseeis am Stil, mit Vorrichtung zur kontaktlosen Beförderung des Speiseeises
Installation et méthode de production d'esquimaux et dispositif de déplacement des articles sans contact manuel

(30) Priority: 29.11.1996 IT MI962496
(43) Date of publication of application: 12.08.1998
(73) Proprietor: Gram Equipment A/S, 6500 Vojens (DK)
(72) Inventor: Grigoli, Franco Albino Luigi, Milano (IT)
(74) Representative: Nielsen, Leif

(56) References cited:
- EP-A- 0 039 515
- EP-A- 0 212 704
- WO-A-95/20883
- FR-A- 665 755
- US-A- 2 629 346
- US-A- 2 859 714
- US-A- 3 085 520
- US-A- 3 648 625
- US-A- 4 142 001
- US-A- 4 189 289
- US-A- 4 209 288
- US-A- 4 548 045
- US-A- 4 648 829
- US-A- 4 761 962
- US-A- 5 343 710
- US-A- 5 378 483
- US-A- 5 425 958
- US-A- 5 516 540

## Description

This invention proposes a method of producing an ice cream product with a stick comprising the steps of:
- cooling ice cream to a temperature sufficient to allow the ice cream to be supported by a stick,
- inserting a stick into a holding means mounted on a conveying device,
- conveying the stick to an extrusion press area,
- extruding the ice cream,
- cutting the extruded ice cream to form a bar of ice cream while inserting the stick into the bar of ice cream.

Moreover the invention proposes a plant for producing an ice cream product with a stick comprising:
- means for cooling ice cream to a temperature sufficient to allow insertion of a stick,
- means for holding the stick mounted on a conveyor device,
- means for extruding the ice cream,
- means for cutting the ice cream into a bar of ice cream,
- means for inserting the stick into the bar of ice cream.

Moreover the invention proposes a plant for producing an ice cream product with a stick comprising:
- means for cooling ice cream to a temperature sufficient to allow insertion of a stick,
- means for holding the stick mounted on a conveyor device,
- means for extruding the ice cream,
- means for cutting the ice cream into a bar of ice cream,
- means for inserting the stick into the bar of ice cream.

The ice cream bars are provided from the extrusion in such way that it is possible to move the product grasping only the stick, without the product itself getting in touch with any part of the plant. The ice cream bar is cooled to such a temperature that lets it achieve a density sufficient to allow it to be supported by means of a stick, keeping it by means of the stick the ice cream bar is sent to the packaging.

With the known methods and the plants for the production through extrusion of ice creams with stick, the product is cooled to a temperature of about -5° C - -6° C so as to let it reach a certain density, is extruded, cut and then placed on trays or similar to be brought to a freezing apparatus where the product, within 18-20 minutes is cooled in an air current until it reaches the required temperature and density.

These plants are however expensive, cumbersome and imply high management and maintenance costs.

The tray devices for the conveyance of the product are complex manufactures and more over they need at the end of each work cycle to be washed and sterilized.

This implies waste of a noticeable quantity of water and detergents and the need to treat these washing waters before the draining; all this, means a noticeable waste of energy and material with consequent costs.

Also the freezing apparatus, generally with freon cooling or analogous system, is cumbersome and expensive.

As the dimensions of the machine are proportional to period of permanence of the products inside it, before they reach the necessary temperature, it is clear that a plant with high productivity needs a freezing apparatus with noticeable dimensions, suitable to allow a permanence of the products inside it for a period of time that varies, as above mentioned, between 18 and 20 minutes.

At the end, the inconveniences of today's plants and methods can be synthesized like that;
- need of a plant with trays or other conveyance devices on which the product must be placed to be cooled until it reaches the sufficient density;
- costs deriving from the consumption of detergents and water for the washing of the parts of the plant that get in touch with the product and costs for the following treatment of the water before draining;
- cost of the plant and costs for the maintenance personnel;
- energetic costs to create and maintain the cold in the freezing chamber;
- use of cooling gases noxious for the environment, as for instance CFC, ammonia etc.;
- noticeable dimensions of the plant itself.

A method and a plant mentioned be way of introduction is known from US-A-2 859 714. According to the disclosure thereof the ice cream bar cooled to a temperature allowing it to be supported by means of the stick is sent directly to the packaging. There is no disclosure of intermediate processing of the ice cream bar except that a coating with a melted chocolate which hardens in a few seconds due to the low temperature of the ice cream bar. Thus the ice cream bar is not cooled sufficient for storage. Accordingly such cooling is to be effected for the packaged ice cream bar and still there will be need for freezing or cooling apparatuses being expensive and cumbersome as the dimensions of the machine is proportional to period of permanence of the ice cream bar inside it, before they reach the necessary temperature.

It is an object with the present invention to provide a method and a plant which makes it possible to reduce the above mentioned inconveniences.

According to the present invention this is achieved with a method being peculiar in:
- conveying the bar of ice cream by the stick while being held in and supported by the holding means into and through a cooling chamber for cooling the bar of ice cream to a final temperature.

According to the present invention a plant is peculiar in:
- a cooling chamber comprising a holding means mounted on a conveying device for conveying the bar of ice cream by the stick while being held in and supported by the holding means into and through the cooling chamber for cooling the bar of ice cream to a final temperature.

Accordingly the ice cream bar is inserted into a conveyor device that moves it within a cooling chamber until it reaches the final temperature. At the coming out from this latter the ice cream bar is completed with coatings, if necessary, and then it is sent to the packaging.

According to a preferred embodiment of the invention, the freezing plant is of the liquid nitrogen type and the conveyor is formed by a plurality of pliers that grasp the stick with the product and that are fitted on a chain that moves along a course located on a substantially horizontal plane.

The plant according to the invention has compact dimensions, low costs and presents management costs lower than those of the plants used today.

These inconveniences connected with the above mentioned prior art methods and plants are eliminated with the plant and the method according to the invention, where the extrusion of the product is provided when this reaches a density sufficient to allow the insertion of a stick and the handling of it only grasping the stick. It is then possible to eliminate the tray conveyance device, avoiding related costs and space occupancy.

Besides, the plant washing operations are eliminated, avoiding in this way the expenses for detergents, water and their treatment.

The products with the stick inserted pass directly from the extrusion press to a cooling plant of the liquid nitrogen type, moving them along a ring course that is located on a substantially horizontal plane, with a noticeable reduction of the spaces occupied also by this latter plant.

These and other characteristics shall appear better from the following detailed description, provided as an example not limitative, with reference to the enclosed figures, where:
figures 1-6 show schematically a device for the extrusion and cutting of the product during the various steps of the production cycle;
figure 7 is the schematic view in elevation of a plant according to the invention.

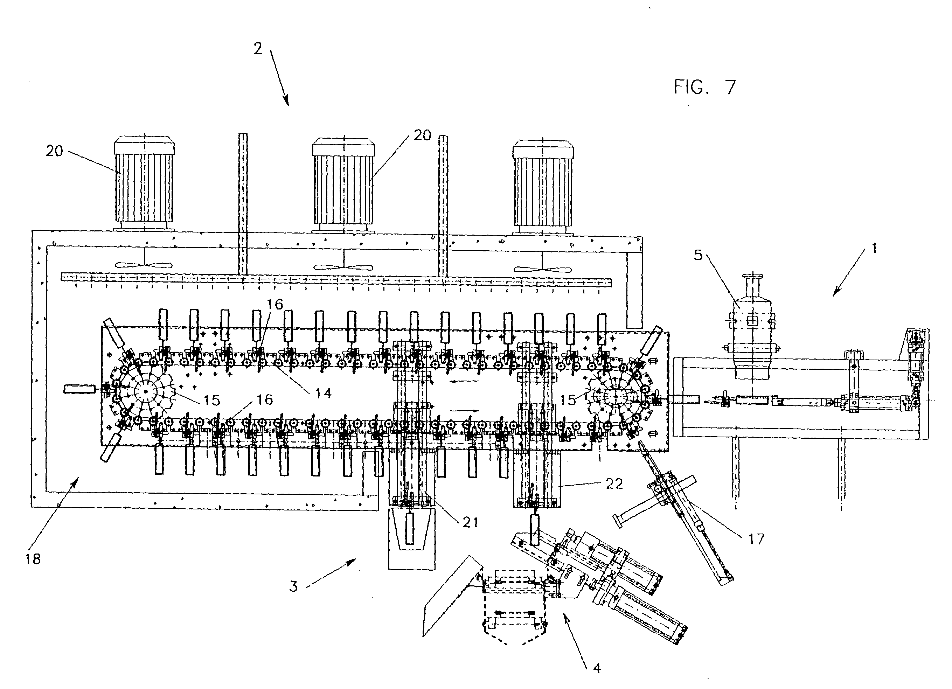

With reference to figure 7, the plant according to the invention includes a unit for extrusion, cutting and sticking, shown in the whole with 1, a cooling unit, shown with 2, one or more units 3, where the product is coated, and a collecting and packaging unit 4. In unit 1 an extrusion press 5 of a known type is located, where the product, cooled to a temperature sufficient to let it reach a certain density, for instance a temperature of about -9°C - -10°C, is extruded in bars having the dimensions of the finished product.

The extrusion press is fitted on a mobile support that lets it move forward and back for a certain stroke, in order to allow the cutting and the removing of the product according to the sequence shown in figures from 1 to 6.

At the coming out from the extrusion press a cutting device 6 and the device 7, that inserts into the cut product a stick 8, are located.

The cutting device includes a bow 9 with a warmed thread not shown in figure that cuts of the product coming out from the extrusion press.

The bow 9 is fitted on a piston 10, hinged on one side to a support 11 and on the other side to a second piston 12 that operates the rotation around support 11, in order to place the bow in an inclined position with reference to the extrusion press and to the cut product.

The cutting cycle is shown in figures from 4 to 6.

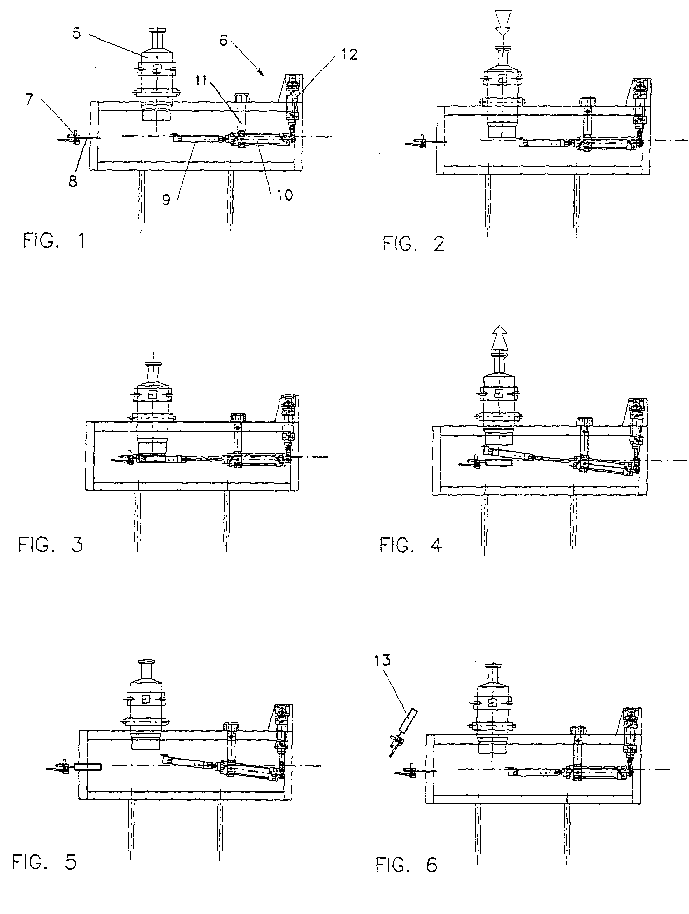

The extrusion press, after the product reaches the required temperature, goes forward until it reaches with its front end the nearness of the cutting thread fitted on the bow 9 (figure 2).

The bar of product that comes out from the extrusion press is cut, while at the same time the inserter 7 is advanced for the insertion of a stick 8 into the bar of extruded product, while the warmed thread, which moves in contact with the entrance of the extrusion press, accomplishes the cutting operation.

At this point the extrusion press steps back (figure 4) in order to avoid that the product, that is still being extruded, gets in touch with the warmed thread.

At the same time, the piston 12 is operated in order to place the bow 9 in an inclined position, as shown always in figure 4, so as to remove it from the cutting zone, acting on the piston 10, without that the warmed thread gets in touch with the already cut product or with the product that is still being extruded.

The bow goes in the position of figure 5, while the inserter 7 goes back and brings the end of the stick in correspondence of a conveyance device provided with grasping pliers of a known type, that takes the product.

At this point, the machine is in the position of figure 6 and starts a cutting cycle, while the already cut product, shown in figure 6 with number 13, goes to the final cooling.

The cooling apparatus is shown in figure 7 and includes a conveyor substantially formed by a chain 14 fitted on a couple of wheels 15 and to which a plurality of pliers 16 are applied that are suitable to receive, each of them, one or more sticks.

These sticks are inserted into the pliers by an apparatus 17 of a known type that is located immediately above the extrusion unit.

The devices that insert the stick into the pliers, take it in order to insert it into the product, and place it again in the pliers, are of a known type and it is not necessary a detailed description.

According to the invention the product with the stick inserted is grasped by the pliers 16 and conveyed, by chain 14, in a cooling tunnel where it reaches the final required temperature.

The tunnel includes a chamber 18 with appropriately insulated walls, inside which liquid nitrogen is sprayed through a plurality of nozzles 19.

The liquid nitrogen, expelled in little drops, is dispersed in the environment by means of a plurality of ventilators 20.

The use of liquid nitrogen allows to considerably reduce the cooling period of time and therefore, with the same production capacity of the plant, to reduce the dimensions of it.

At the exit of chamber 18 an apparatus 21 can be provided that is suitable to take the products already completely cooled and coat them with a further layer, for instance chocolate, grains or similar, and below this latter apparatus there is an extraction device that places the product in the packaging apparatus 4. It is in this way realized a production in perfect hygienic conditions, with a plant ecologically advanced, as there is no contact between the product and the different parts that form the plant itself.

The plant results besides valuable from an ecological point of view as no cooling gases noxious to the environment are used, removing in this way the risk of pollution.

An expert could then provide many variations and changes that shall anyway be considered all included in the scope of the present invention.

## Claims

1. Method of producing an ice cream product with a stick comprising the steps of:
- cooling ice cream to a temperature sufficient to allow the ice cream to be supported by a stick,
- inserting a stick into a holding means mounted on a conveying device,
- conveying the stick to an extrusion press area,
- extruding the ice cream,
- cutting the extruded ice cream to form a bar of ice cream while inserting the stick into the bar of ice cream,
**characterized in**
- conveying the bar of ice cream by the stick while being held in and supported by the holding means into and through a cooling chamber for cooling the bar of ice cream to a final temperature.

2. Method according to claim 1, **characterized in that** the temperature when inserting the stick is between -9° C and -10° C.

3. Method according to one of the above claims, **characterized in** cooling the ice cream bar during a second cooling step in the cooling chamber using liquid nitrogen.

4. Method according to claim 3, **characterized in** including spraying the liquid nitrogen as droplets in the cooling chamber for cooling the ice cream bar during the second cooling step.

5. Method according to claim 1, **characterized in** including conveying the ice cream bar in the cooling chamber during the second cooling step along a closed path lying in a horizontal plane in the cooling chamber.

6. Plant for producing an ice cream product with a stick comprising:
- means for cooling ice cream to a temperature sufficient to allow insertion of a stick,
- means for holding the stick mounted on a conveyor device,
- means for extruding the ice cream,
- means for cutting the ice cream into a bar of ice cream,
- means for inserting the stick into the bar of ice cream,
**characterized in**
- a cooling chamber comprising a holding means mounted on a conveying device for conveying the bar of ice cream by the stick while being held in and supported by the holding means into and through the cooling chamber for cooling the bar of ice cream to a final temperature.

7. Plant according to claim 6, **characterized in that** the means for inserting the stick into the ice cream bar acts at the same time as the means for cutting the ice cream bar.

8. Plant according to claim 6, **characterized in** cooling means which cools the ice cream to an initial temperature between -9° C and -10° C.

9. Plant according to anyone of claims 6 - 8, **characterized in that** said cooling chamber includes means for applying liquid nitrogen to the ice cream for cooling the ice cream.

10. Plant according to claim 9, **characterised in that** the means for applying liquid nitrogen acts for spraying liquid nitrogen as droplets in the cooling chamber for cooling the ice cream bar during the second cooling step.

11. Plant according to anyone of claims 6 - 10, **characterised in that** the conveying means moves the ice cream bar in the cooling chamber during a second cooling step along a closed path lying in a horizontal plane.

## Patentansprüche

1. Verfahren zur Herstellung von einem Eiskremprodukt mit Stiel, das folgende Stufen umfasst:
- Kühlung von Eiskrem bis zu einer ausreichenden Temperatur, damit die Eiskrem von einem Stiel unterstützt werden kann,
- Einführung eines Stiels in eine Griffeinrichtung, die auf einer Fördereinrichtung angebracht ist,
- Förderung des Stiels zu einem Extrudierungspressgebiet,
- Extrudieren der Eiskrem,
- Abschneiden der extrudierten Eiskrem um einen Riegel aus Eiskrem zu bilden, während der Stiel in den Eiskremriegel eingeführt wird,
**dadurch gekennzeichnet, dass**
- der Einkremriegel mittels dem Stiel, während er von der Griffeinrichtung eingehalten und unterstützt wird, in eine Kühlkammer hinein und hindurch geführt wird, um den Eiskremriegel bis zu einer Endtemperatur abzukühlen.

2. Verfahren nach Anspruch 1, **dadurch gekennzeichnet, dass** die Temperatur beim Einführen des Stiels zwischen -9° C und -10° C ist.

3. Verfahren nach einem der vorstehenden Ansprüche, dadurch **gekennzeichnet,** dass der Eiskremriegel während einer zweiten Kühlungsstufe in der Kühlkammer mittels flüssigem Stickstoff abgekühlt wird.

4. Verfahren nach Anspruch 3, **dadurch gekennzeichnet, dass** es ein Besprühen des flüssigen Stickstoffes als Tröpfchen in der Kühlkammer, um den Eiskremriegel während der zweiten Kühlungsstufe zu kühlen, umfasst.

5. Verfahren nach Anspruch 1, **dadurch gekennzeichnet, dass** es das Fördern von dem Eiskremriegel in der Kühlkammer während der zweiten Kühlungsstufe entlang einem geschlossenen Weg liegend in einer horizontalen Ebene in der Kühlkammer umfasst.

6. Anlage zur Herstellung eines Eiskremproduktes mit Stiel, die folgendes umfasst:
- Mittel zur Kühlung von Eiskrem bis zu einer ausreichenden Temperatur, die eine Einführung eines Stiels erlaubt,
- Mittel zum Ergreifen des Stiels, die auf einer Fördereinrichtung angebracht sind,
- Mittel zum Extrudieren der Eiskrem,
- Mittel zum Abschneiden der Eiskrem in Eiskremriegeln,
- Mittel zur Einführung des Stiels in dem Eiskremriegel,
**dadurch gekennzeichnet, dass**
- eine Kühlkammer eine Griffeinrichtung umfasst, die auf einer Fördereinrichtung angebracht ist, um den Eiskremriegel mittels dem Stiel, während er von der Griffeinrichtung gehalten und unterstützt wird, in die Kühlkammer hinein und hindurch geführt wird, um den Eiskremriegel bis zu einer Endtemperatur abzukühlen.

7. Anlage nach Anspruch 6, **dadurch gekennzeichnet, dass** die Mittel zur Einführung des Stiels in den Eiskremriegel gleichzeitig als Mittel zum Abschneiden des Eiskremriegels wirken.

8. Anlage nach Anspruch 6, von Kühlmitteln **gekennzeichnet,** die die Eiskrem bis zu einer Anfangstemperatur von zwischen -9° C und -10° C abkühlt.

9. Anlage nach jedem der Ansprüchen 6-8, **dadurch gekennzeichnet, dass** die genannte Kühlkammer Mittel zur Verwendung von flüssigem Stickstoff auf der Eiskrem zur Kühlung der Eiskrem umfasst.

10. Anlage nach Anspruch 9, **dadurch gekennzeichnet, dass** die Mittel zur Verwendung von flüssigem Stickstoff zum Besprühen von flüssigem Stickstoff als Tröpfchen in der Kühlkammer zur Kühlung des Eiskremriegels während der zweiten Kühlungsstufe vorgesehen sind.

11. Anlage nach jedem der Ansprüche 6-10, **dadurch gekennzeichnet, dass** die Fördereinrichtung den Eiskremriegel in der Kühlkammer während einer zweiten Kühlungsstufe entlang einem geschlossenen Weg liegend in einer horizontalen Ebene führt.

## Revendications

1. Procédé de confectionner un produit de crème glacée avec un bâton comprenant les étapes suivantes:
- congéler la crème glacée à une temperature suffisante pour permettre la crème glacée d'être supportée par un bâton,
- mettre un bâton dans un organe de fixation monté sur un dispositif de transport,
- transporter le bâton à un endroit de presse à extrusion,
- extruder la crème glacée,
- couper la crème glacée extrudée pour former une brique de crème glacée en mettant le bâton dans la brique de crème glacée,
**caractérisé** en
- transportant la brique de crème glacée par le bâton en étant maintenu et supporté par l'organe de fixation, dans et à travers d'une chambre de congélation pour congéler le bâton de crème glacée à une temperature finale.

2. Procédé selon la revendication 1, **caractérisé en ce que** la température en mettant le bâton se trouve entre -9° C et -10° C.

3. Procédé selon l'une quelconque des revendications precedentes, **caractérisé** en congélant la brique de crème glacée lors d'une deuxième étape de congélation dans la chambre de congélation en utilisant de l'azote liquide.

4. Procédé selon la revendication 3, **caractérisé** en comportant la pulvérisation de l'azote liquide en tant que gouttelettes dans la chambre de congélation pour la congélation de la brique de crème glacée lors de la deuxième étape de congélation.

5. Procédé selon la revendication 1,caractérisé en comportant le transport de la brique de crème glacée dans la chambre de congélation lors de la deuxième étape de congélation le long d'un trajectoire fermé se trouvant dans un plan horizontal dans la chambre de congélation.

6. Installation pour la production d'un produit de crème glacée avec un bâton comprenant:
- organes pour congéler la crème glacée à une température suffisante pour permettre l'insertion d'un bâton,
- organes pour fixer le bâton montés sur un dispositif de transport,
- organes pour extruder la crème glacée,
- organes pour couper la crème glacée dans une brique de crème glacée,
- organes pour mettre le bâton dans la brique de crème glacée,
caractérisée en
une chambre de congélation comportant un organe de fixation monté sur un dispositif de transport pour le transport de la brique de crème glacé par le bâton en étant suspendu et supporté par l'organe de fixation dans et à travers le chambre de congélation pour congéler la brique de crème glacée à une température finale.

7. Installation selon la revendication 6, **caractérisée en ce que** l'organe pour mettre le bâton dans la brique de crème glacée agit en même temps que l'organe pour couper la brique de crème glacée.

8. Installation selon la revendication 6, **caractérisée** en un organe de congélation qui congèle la crème glacée à une température initiale entre -9° C et -10° C.

9. Installation selon l'une quelconque des revendications 6 à 8, **caractérisée en ce que** ladite chambre de congélation comporte un moyen pour appliquer de l'azote liquide à la crème glacée pour congéler la crème glacée.

10. Installation selon la revendication 9, **caractérisée en ce que** le moyen pour appliquer de l'azote liquide actionne en pulvérisant de l'azote liquide en gouttelettes dans la chambre de congélation pour congéler la brique de crème glacée lors de la deuxième étape de congélation.

11. Installation selon l'une quelconque des revendications 6 à 10, **caractérisée en ce que** l'organe de transport déplace la brique de crème glacée dans la chamre de congélation lors de la deuxième étape de congélation le long d'un trajectoire fermé situé dans un plan horizontal.
